(19) Europäisches Patentamt / European Patent Office / Office européen des brevets

(11) **EP 3 434 735 A1**

(12) **EUROPEAN PATENT APPLICATION**


(43) Date of publication:
**30.01.2019 Bulletin 2019/05**

(21) Application number: **18185542.0**

(22) Date of filing: **25.07.2018**

(51) Int Cl.:
***C09B 62/09*** *(2006.01)* ***C09B 62/085*** *(2006.01)*
***C09B 67/24*** *(2006.01)* ***C09D 11/328*** *(2014.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.07.2017 TW 10624887**
**23.03.2018 TW 10710024**



(71) Applicant: **Everlight Chemical Industrial Corporation**
**106 Taipei City (TW)**

(72) Inventors:
- **CHEN, Chien-Yu**
**328 Taoyuan City (TW)**
- **HUANG, Hong-Chang**
**328 Taoyuan City (TW)**
- **LIEN, Chia-Wen**
**328 Taoyuan City (TW)**
- **HSU, Cheng-Hsiang**
**328 Taoyuan City (TW)**
- **WU, Tz-Yi**
**328 Taoyuan City (TW)**

(74) Representative: **van Trier, Norbertus Henricus Gerardus**
**Octrooibureau Vriesendorp & Gaade B.V.**
**Koninginnegracht 19**
**2514 AB Den Haag (NL)**


(54) **REACTIVE BLACK DYE COMPOSITION AND METHOD FOR DYING FIBERS USING THE SAME**


(57) A reactive black dye composition is disclosed, which comprises: (A) a reactive blue dye represented by the following formula (I) or a salt thereof; and (B) a reactive red dye or a salt thereof, a reactive yellow dye or a salt thereof, or a combination thereof.

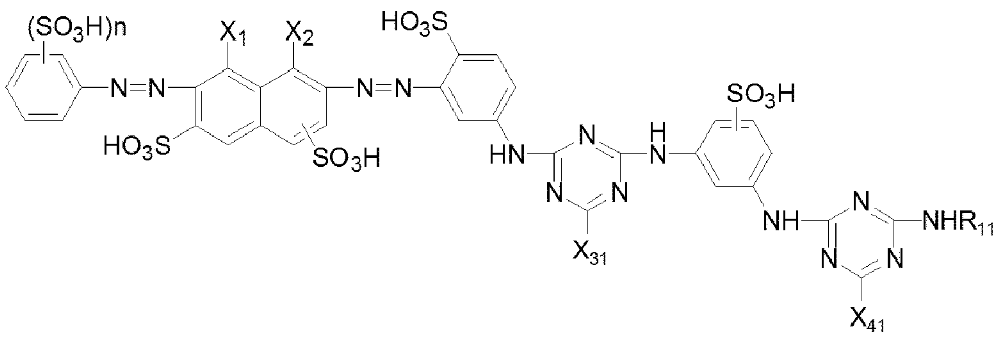

(I)

Herein, $R_{11}$, $X_1$, $X_2$, $X_{31}$, $X_{41}$ and n are defined in the specification.
In addition, a method for dying fibers using the aforesaid reactive black dye composition is also disclosed.


EP 3 434 735 A1

## Description

CROSS REFERENCE TO RELATED APPLICATION

This application claims the benefits of the Taiwan Patent Application Serial Number 106124887 filed on July 25, 2017 and the Taiwan Patent Application Serial Number 107110024 filed on March 23, 2018, the subject matter of which is incorporated herein by reference.

BACKGROUND

1. Field

The present disclosure relates to a reactive black dye composition. More particularly, the present disclosure relates to a reactive black dye composition with high fixing rate.

2. Description of Related Art

Currently, the dye used for digital printing is formulated with traditional P-TYPE dyes. Although the traditional dyes can be used in novel applications, but the fixing rate on the fabrics is not good enough and usually is about 50% to 70%. Hence, even though the traditional dyes can be used in novel applications, the reaction rate is low, and large amount of dyed waste water is generated which cause an issue of treatment of dyed waste water.

In addition, the traditional dyes are almost have single reactive group, so the traditional dye has low reactivity to the fabrics, resulting in uneven coloration and low fixing rate. Thus, the aforesaid issue of large amount of dyed waste water is occurred. Furthermore, even though the HE type reactive dyes have two reactive groups, the dying strength thereof is not as good as the traditional P-Type dyes.

Therefore, it is desirable to provide a novel reactive dye with high reactivity. Thus, the problem that the traditional dye with single reactive group has low fixing rate can be improved, the generation of the dyed waste water can be reduced, and the purpose of the environmental protection can be achieved.

SUMMARY

An object of the present disclosure is to provide a reactive black dye composition, which shows high fixing rate on dyed fibers.

The reactive black dye composition of the present disclosure comprises the following components:

(A) a reactive blue dye represented by the following formula (I) or a salt thereof:

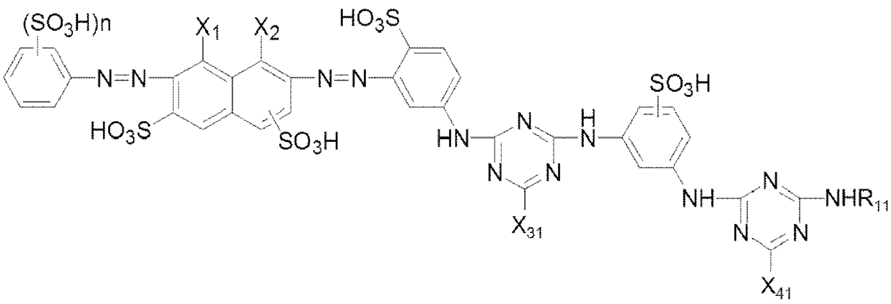

(I)

wherein $X_1$ is -OH or $-NH_2$;

$X_2$ is -OH or $-NH_2$, and $X_1$ and $X_2$ are different;

$R_{11}$ is H, $-C_2H_4SO_3H$, $-C_2H_4OC_2H_4OH$ or

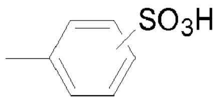

;

$X_{31}$ and $X_{41}$ are respectively a halogen; and

n is 1 or 2; and

(B) a reactive red dye or a salt thereof, a reactive yellow dye or a salt thereof, or a combination thereof.

In the reactive black dye composition of the present disclosure, the reactive blue dye used as the main component are introduced with two monochlorotriazine (MCT) reactive groups, which can increase the dype uptake of the dyes on the fibers, and therefore the obtained reactive black dye composition can show high fixing rate. Compared to the conventional reactive black dye composition with one reactive group, the reactivity of the reactive black dye composition of the present disclosure can be greatly increased, and thus the fixing rate of the reactive black dye composition can be increased from 50~70% to 85% or more. When the reactive black dye composition is used in digital printing or textile printing, the problem that the fixing rate of the reactive black dye composition is not high enough can be solved. Therefore, the dyes in the waste water can be reduced, and the purposes of environmental protection and energy saving can further be achieved.

In the present disclosure, $X_{31}$ and $X_{41}$ in the reactive blue dye can respectively be Cl, Br or I. In one embodiment, $X_{31}$ and $X_{41}$ are respectively Cl.

In the present disclosure, the reactive blue dye can be represented by the following formula (I-1):

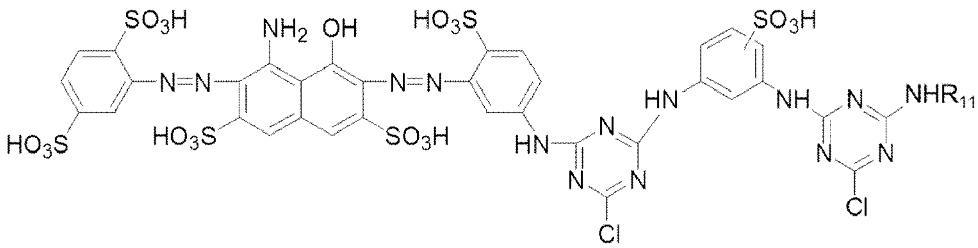

(I-1)

wherein $R_{11}$ is defined as above.

In one embodiment of the present disclosure, the reactive blue dye of the formulas (I) or (I-1) can be a compound represented by anyone of the following formulas (I-2) to (I-4):

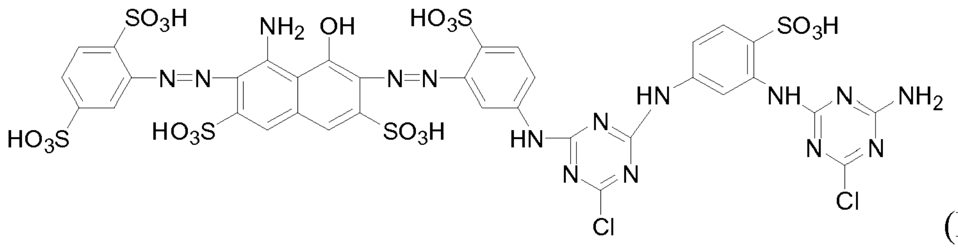

(I-2)

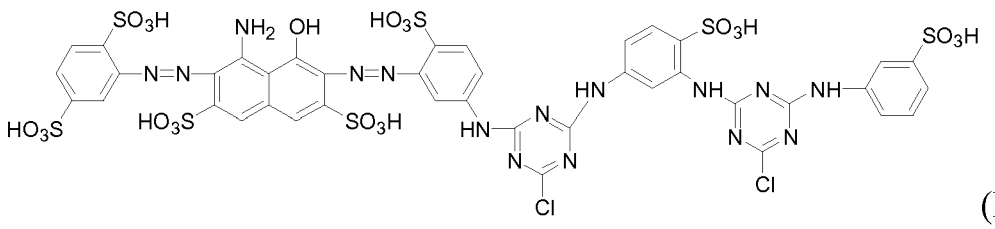

(I-3)

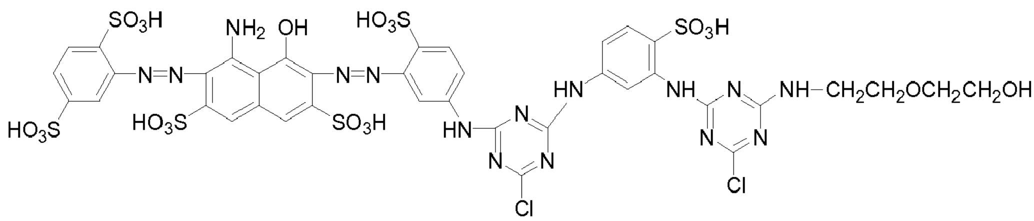

(I-4).

In the present disclosure, the reactive red dye can be represented by the following formula (II):

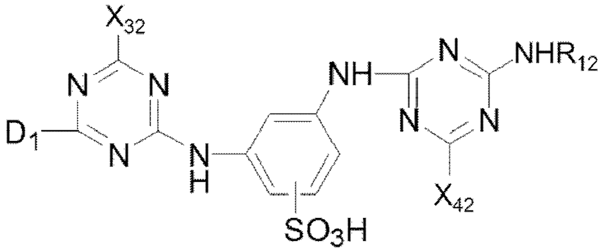

(II)

wherein $R_{12}$ is H, $-C_2H_4SO_3H$, $-C_2H_4OC_2H_4OH$ or

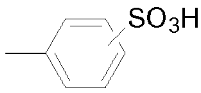

;

$X_{32}$ and $X_{42}$ are respectively a halogen; and
$D_1$ is a red chromophore.

In one embodiment of the present disclosure, the red chromophore in the reactive red dye can be

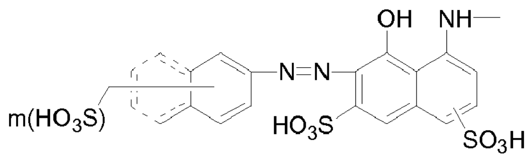

,

wherein m is 1 or 2.

In the present disclosure, $X_{32}$ and $X_{42}$ in the reactive red dye can respectively be Cl, Br or I, and m is 1 or 2. In one embodiment, $X_{32}$ and $X_{42}$ are respectively Cl, and m is 2.

In one embodiment of the present disclosure, the reactive red dye of the formula (II) can be represented by the following formula (II-1):

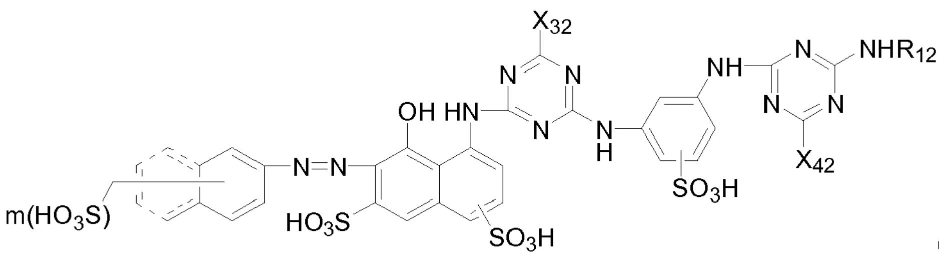

(II-1)

wherein $R_{12}$, $X_{32}$, $X_{42}$ and m are defined as above.

In another embodiment of the present disclosure, the reactive red dye of the formulas (II) or (II-1) can be represented by the following formula (II-2):

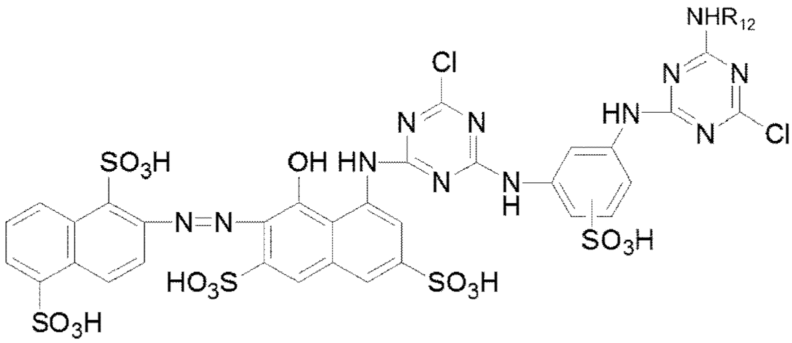

(II-2)

wherein $R_{12}$ is defined as above.

In another embodiment of the present disclosure, the reactive red dye of the formulas (II), (II-1) or (II-2) can be a compound represented by anyone of the following formulas (II-3) to (II-6):

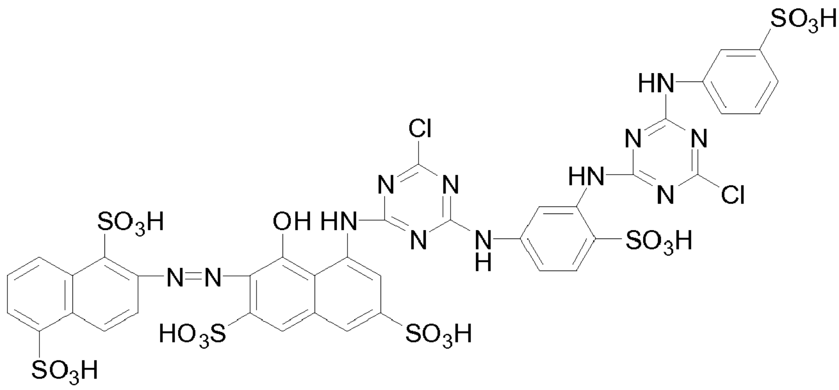

(II-3)

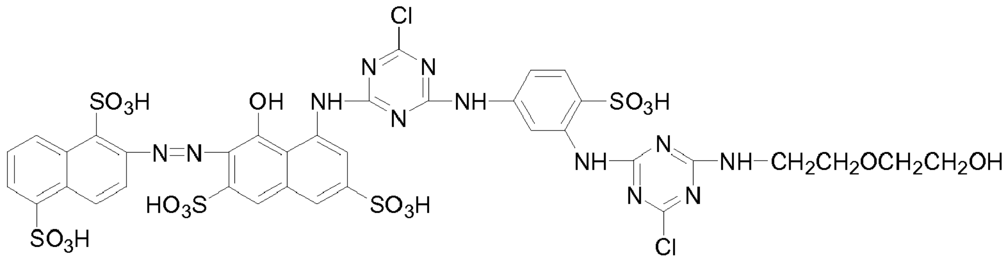

(II-4)

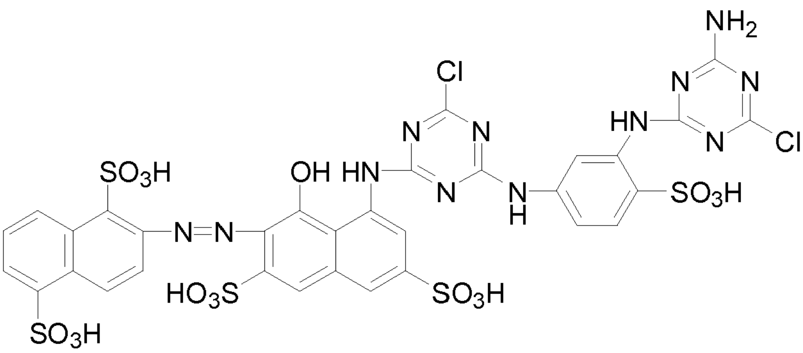

(II-5)

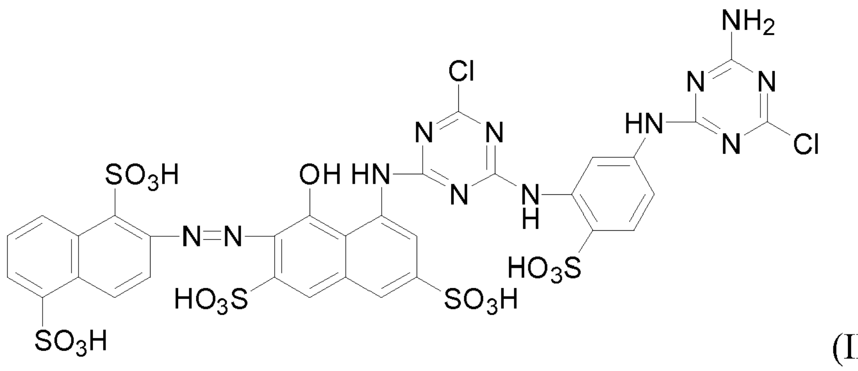

(II-6).

In the present disclosure, the reactive yellow dye can be represented by the following formula (III):

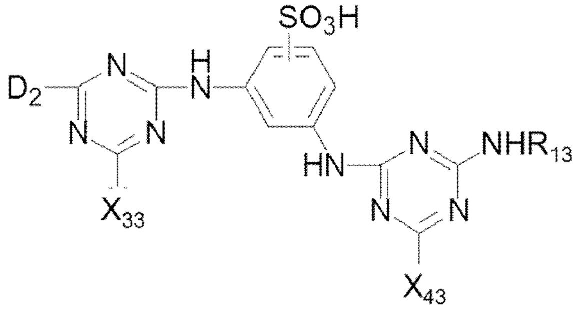

(III)

wherein $R_{13}$ is H, $-C_2H_4SO_3H$, $-C_2H_4OC_2H_4OH$ or

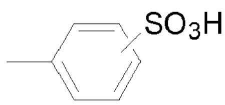

;

$X_{33}$ and $X_{43}$ are respectively a halogen; and
$D_2$ is a yellow chromophore.

In one embodiment of the present disclosure, the yellow chromophore in the reactive yellow dye can be

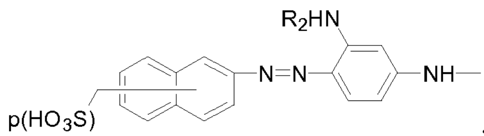

,

wherein $R_2$ is $-CONH_2$ or $-COCH_3$, and p is 1, 2 or 3.

In one embodiment of the present disclosure, $X_{33}$ and $X_{43}$ in the reactive yellow dye can respectively be Cl, Br or I. In one embodiment, $X_{33}$ and $X_{43}$ are respectively Cl, $R_2$ is $-CONH_2$ or $-COCH_3$, and p is 1, 2 or 3.

In one embodiment of the present disclosure, the reactive yellow dye of the formula (III) can be represented by the following formula (III-1):

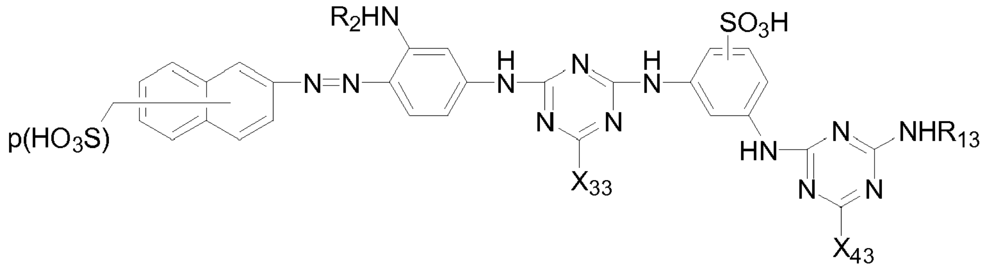

(III-1)

wherein $R_{13}$, $X_{33}$, $X_{43}$, $R_2$ and p are defined as above.

In another embodiment of the present disclosure, the reactive yellow dye of the formulas (III) or (III-1) can be represented by the following formula (III-2):

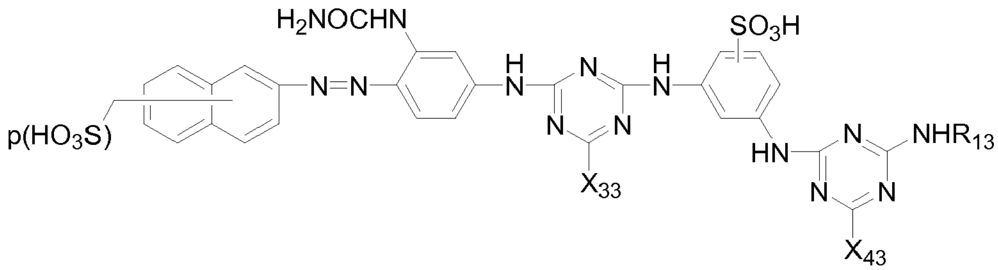

(III-2)

wherein $R_{13}$, $X_{33}$, $X_{43}$ and p are defined as above.

In another embodiment of the present disclosure, the reactive yellow dye of the formulas (III), (III-1) or (III-2) can be represented by the following formula (III-3):

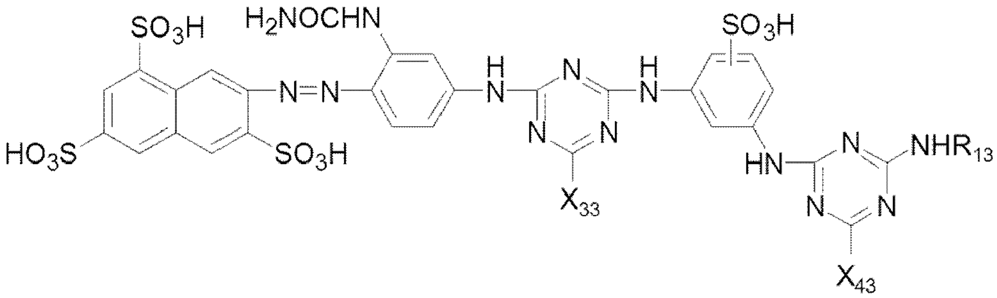

(III-3)

wherein $R_{13}$, $X_{33}$ and $X_{43}$ are defined as above.

In another embodiment of the present disclosure, the reactive yellow dye of the formulas (III), (III-1), (III-2) or (III-3) can be represented by the following formula (III-4):

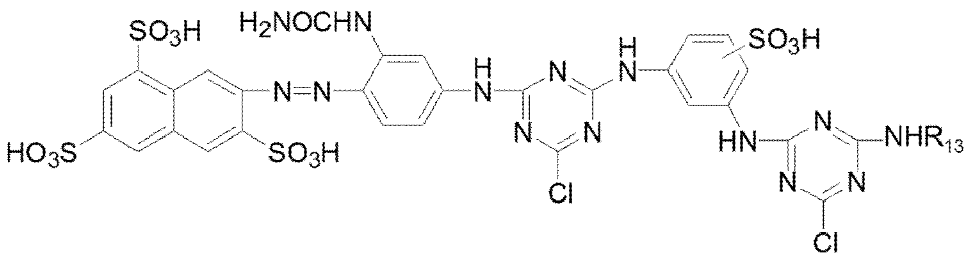

(III-4)

wherein $R_{13}$ is defined as above.

In another embodiment of the present disclosure, the reactive yellow dye of the formulas (III), (III-1), (III-2), (III-3) or (III-4) can be represented by the following formulas (III-5) or (III-6):

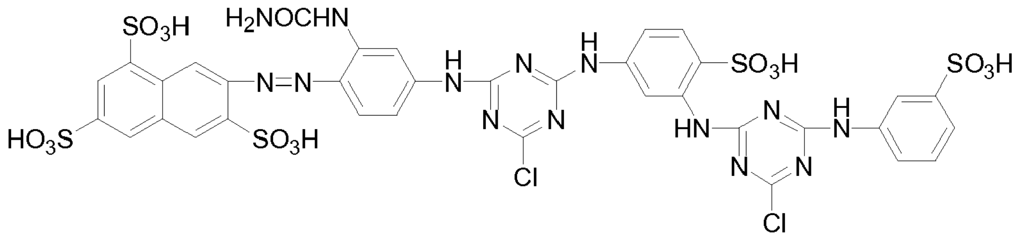

(III-5)

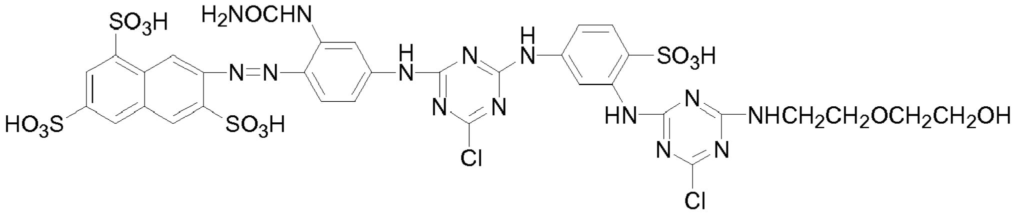

(III-6).

In one embodiment of the present disclosure, the component (B) may comprise both the reactive red dye or a salt thereof, and the reactive yellow dye or a salt. Thus, the reactive black dye composition of the present disclosure comprises the reactive blue dye, the reactive red dye and the reactive yellow dye. Herein, all the reactive blue dye, the reactive red dye and the reactive yellow dye may respectively comprise two MCT reactive groups. When the reactive black dye compostion comprises the reactive blue dye with two MCT reactive groups, the reactive red dye with two MCT reactive groups and the reactive yellow dye with two MCT reactive groups, the reactivity of the reactive black dye composition can be greatly increased. Therefore, the dype uptake of dyes on the fibers can be improved, and the purpose of high fixing rate can be achieved. In another embodiment of the present disclosure, the reactive blue dye can comprises two MCT reactive groups, but the reactive red dye and the reactive yellow dye can selectively comprise two MCT reactive groups, one MCT reactive group, or one or more other reactive groups, respectively.

In the present disclosure, the ratio of the reactive blue dye, the reactive red dye and the reactive yellow dye in the reactive black dye composition is not particularly limited, and can be adjusted according to the desired color. In one embodiment of the present disclosure, a content of the reactive blue dye is between 40 parts by weight and 90 parts by weight, a content of the reactive red dye is between 5 parts by weight and 30 parts by weight, and a content of the reactive yellow dye is between 5 parts by weight and 50 parts by weight. In another embodiment of the present disclosure, a content of the reactive blue dye is between 55 parts by weight and 85 parts by weight, a content of the reactive red dye is between 10 parts by weight and 20 parts by weight, and a content of the reactive yellow dye is between 15 parts by weight and 30 parts by weight. In further another embodiment of the present disclosure, a content of the reactive blue dye is between 60 parts by weight and 75 parts by weight, a content of the reactive red dye is between 12 parts by weight and 17 parts by weight, and a content of the reactive yellow dye is between 18 parts by weight and 25 parts by weight. However, the present disclosure is not limited thereto.

In one embodiment of the present disclosure, the reactive blue dye or the salt thereof comprises: the reactive blue dye itself, a lithium salt of the reactive blue dye, or a sodium salt of the reactive blue dye. The reactive red dye or the salt thereof comprises: the reactive red dye itself, a lithium salt of the reactive red dye, or a sodium salt of the reactive red dye. Similarly, the reactive yellow dye or the salt thereof comprises: the reactive yellow dye itself, a lithium salt of the reactive yellow dye, or a sodium salt of the reactive yellow dye. However, the present disclosure is not limited thereto.

The reactive black dye composition of the present disclosure can be applied to dying various fibers by digital printing or textile printing. For example, the reactive black dye composition of the present disclosure can be applied to digital printing or textile printing for dying cellulose fibers, synthesized polyamide fibers, sheepskin, leather or other mixed fibers to obtain dyed materials with high fixing rate, high depth and excellent fastness.

Hence, the present disclosure further provides a use of the aforesaid reactive black dye composition for digital printing (also called as jet printing) or textile printing (also called as traditional printing). In addition, the present disclosure further provides a method for dying fibers, which comprises: dying fibers with the aforesaid reactive black dye composition by digital printing or textile printing.

Other novel features of the disclosure will become more apparent from the following detailed description when taken in conjunction with the accompanying drawings.

DETAILED DESCRIPTION OF EMBODIMENT

The following embodiments when read with the accompanying drawings are made to clearly exhibit the above-mentioned and other technical contents, features and/or effects of the present disclosure. Through the exposition by means of the specific embodiments, people would further understand the technical means and effects the present disclosure adopts to achieve the above-indicated objectives. Moreover, as the contents disclosed herein should be readily understood and can be implemented by a person skilled in the art, all equivalent changes or modifications which do not depart from the concept of the present disclosure should be encompassed by the appended claims.

Unless specified otherwise, singular words "a" and "the" used in the present specification and claims include one or plural objects.

Unless specified otherwise, term "or" used in the present specification and claims include meaning of and/or.

The present disclosure is explained by the following embodiments, which are not used to limit the scope of the present disclosure. Unless specified otherwise, in the following preparation examples, examples and comparative examples, the unit of the temperature is Celsius (°C), parts and % used herein are respectively referred to parts by weight and weight percentage. The relation between parts by weight and volumes by weight is similar to that between kilogram (kg) and liter (L).

*Preparation example 1 - Preparation of the reactive blue dye of the formula (I-2*)

9.8 parts by weight of 2,4-diaminobenzenesulfonic acid was added into 80 parts by weight of water, and 45 wt% of alkali solution was added therein to dissolve the compounds. The obtained solution was maned A solution. In addition, 9.8 parts by weight of cyanuric chloride was dispersed in iced water by stirring. The A solution was added into the disparsion solution dropwise, sodium carbonate was used to adjust the pH of the mixing solution between 6 and 6.5, and the mixing solution was kept stirring until the condensation reaction was completed. Then, 3.7 parts by weight of $NaNO_2$ was added therein and stirred, followed by adding 12 parts by weight of HCl aqueous solution (32 wt%). The mixing solution was kept stirring at 10C or less until the diazotization reaction was completed. The obtained solution was named B solution.

On the other hand, 13.9 parts by weight of aniline-2,5-disulfonic acid was added into 40 parts by weight of water, and 45 wt% of alkali solution was added therein to dissolve the compounds. Then, 3.9 parts by weight of $NaNO_2$ was added therein and stirred, and the obtained solution was added to 15 parts by weight of iced HCl aqueous solution (32 wt%) dropwise. The mixing solution was kept stirring at 10°C or less until the diazotization reaction was completed. Then, 15.95 parts by weight of an aqueous solution of H acid (1-amino-8-naphthol-3,6-disulfonic acid) was added into the above mixing solution obtained after the diazotization reaction to perform a coupling reaction. The solution obtained after the coupling reaction was added into the B solution, and 15 wt% of alkali aqueous solution was added therein to adjust the pH of the obtained solution to 6 or more. The obtained solution was kept stirring at 15°C or less until the reaction was completed. Then, 9.4 parts by weight of 2,4-diaminobenzenesulfonic acid powders was added therein, and 15 wt% of alkali aqueous solution was added therein to adjust the pH of the obtained solution to 6 or more. The obtained solution was kept stirring unitl the condensation reaction was completed. After the obtained solution was cooled down, 9.7 parts by weight of cyanuric chloride was added therein, and 15 wt% of alkali aqueous solution was added therein to adjust the pH of the obtained solution to 6 or more. The obtained solution was kept stirring until the condensation reaction was completed, and a product (a) is otained. Then, 7 parts by weight of ammonia was added therein, and the temperature of the solution was increasd to 35°C or more. 45 wt% of alkali solution was used to control the pH of the solution, and the solution was kept stirring to obtain the product of the formula (I-2).

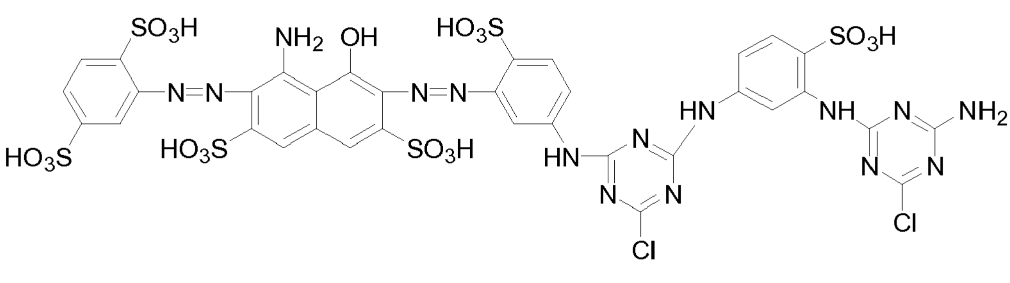

(I-2)

*Preparation example 2 - Preparation of the reactive red dye of the formula (II-3)*

15.2 parts by weight of 2-naphthylamine-1,5-disulfonic acid was added into 150 parts by weight of iced water, followed by adding 14 parts by weight of HCl aqueous solution (32 wt%) and stirring. Then, an aqueous solution containig 3.5 parts by weight of $NaNO_2$ was added into the mixing solution, and the obtained solution was kept sitrring at 0°C to 5°C until the diazotization reaction was completed. The obtained solution was named diazotization solution.

15.95 parts by weigh of l-naphthol-8-amino -3,6-disulfonic acid was added into 40 parts by weight of water,

and 45 wt% of alkali solution was added therein to dissolve the compounds. The obtained solution was named C solution. 9.8 parts by weight of cyanuric chloride was dispersed in iced water by stirring. The C solution was added into the disparsion solution dropwise, sodium carbonate aqueous solution (15 wt%) was used to adjust the pH of the mixing solution to 6 or more. The mixing solution was kept stirring until the condensation reaction was completed. The above diazotization solution was added into the mixing solution obtained after the condensation solution, and an alkali solution was used to adjust the pH of the mixing solution to 6 or more. Next, 9.4 parts by weight of 2,4-diaminobenzenesulfonic acid powders were added therein, and 15 wt% of an alkali aquesous solution was used to adjust the pH of the mixing solution to 6 or more. The mixing soution was ketp stirring until the condensation reaction was completed. After the mixing solution was cooled down, 9.7 parts by weight of cyanuric chloride was added therein, and 15 wt% of an alkali aqueous solution was used to adjust the pH of the mixing solution to 6 or more. The mixing solution was kept

stirring unitl the condensation reaction was completed and a produce (b) was obtained. Then, 8.7 parts by weight of m-aminobenzenesulfonic acid was added therein, and 15 wt% of an alkali aqueous solution was used to adjust the pH of the mixing solution to 6 or more. The mixing solution was kept stirring to obtain the product of the formula (II-3).

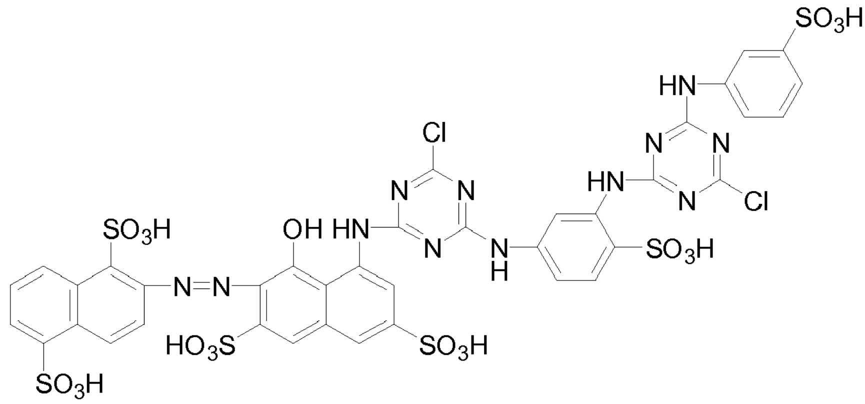

(II-3)

*Preparation example 3 - Preparation of the reactive yellow dye of the formula (III-5)*

19.15 parts by weight of 2-naphthylamine-3,6,8-trisulfonic acid was uniformly dispersed in 75 parts by weight of iced water, and 45% of an alkali solution was used to dissolve the compound. Then 3.55 parts by weight of $NaNO_2$ was was added therein, and the obtained solution was added into 13 parts by weight of iced HCl aqueous solution (32 wt%). The mixing solution was stirred at 8°C to 15°C until the diazotization reaction was completed. Next, the obtained solution was added into a solution containig 7.6 parts by weight of 1-(3-aminophenyl)urea, and 15 wt% of sodium carbonate aqueous solution was used to keep the pH of the mixing solution between 4.5 and 5.5. The mixing solution was stirred at 20°C or less until the coupling reation was completed. Ice was added to cool down the mixing solution. 9.7 parts by weight of cyanuric chloride was added therein, and 15 wt% of an alkali aqueous solution was used to adjust the pH of the mixing solution to 4.5 or

more. After the reaction was completed and the mixing solution was filtered, 9.4 parts by weight of 2,4-diaminobenzenesulfonic acid powders was added therein, and 15 wt% of an alkali aqueous solution was used to adjust the pH of the obtained solution to 6 or more. The mixing solution was kept stirring until the condensation reaction was completed. After the mixing solution was cooled down, 9.7 parts by weight of cyanuric chloride was added therein, and 15 wt% of alkali aqueous solution was used to adjust the pH of the mixing solution to 6 or more. The mixing solution was kept stirring until the condensation reaction was completed, and a product (c) was obtained. Then, 8.7 parts by weight of m-aminobenzenesulfonic acid was added therein, and 15 wt% of an alkali aqueous solution was used to adjust the pH of the mixing solution to 6 or more. The mixing solution was kept stirring and the product of the formula (III-5) can be obtained.

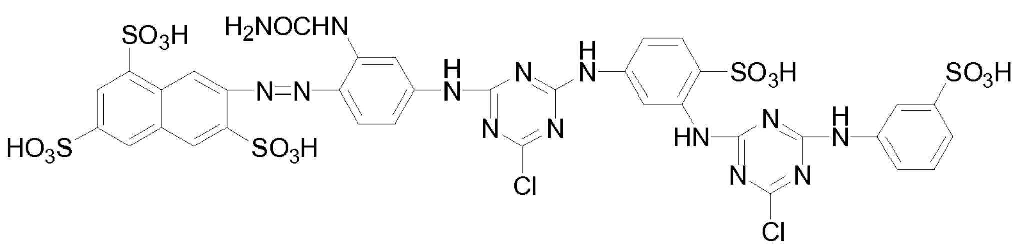

(III-5)

*Preparation example 4 - Preparation of the reactive blue dye of the formula (I-3)*

8.7 parts by weight of m-aminobenzenesulfonic acid was added into the product (a) of Preparation example 1, and 15 wt% of an alkali aqueous solution was used to adjust the pH of the mixing solution to 6 or more. The mixing solution was kept stirring to obtain the product of the formula (I-3).

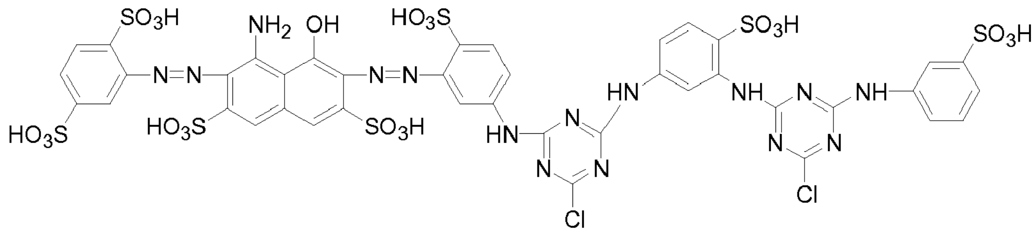

(I-3)

*Preparation example 5 - Preparation of the reactive blue dye of the formula (I-4)*

5.8 parts by weight of 2-(2-aminoethoxy)ethanol was added into the product (a) of Preparation example 1, and 15 wt% of an alkali aqueous solution was used to adjust the pH of the mixing solution to 8 or more. The mixing solution was kept stirring to obtain the product of the formula (I-4).

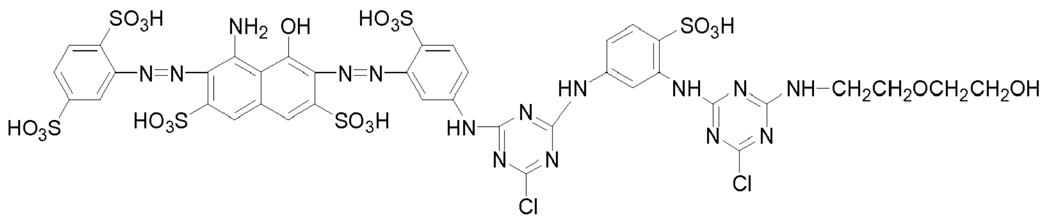

(I-4)

*Preparation example 6 - Preparation of the reactive red dye of the formula (II-4)*

5.8 parts by weight of 2-(2-aminoethoxy)ethanol was added into the product (b) of Preparation example 2, and 15 wt% of an alkali aqueous solution was used to adjust the pH of the mixing solution to 6 or more. The mixing solution was kept stirring to obtain the product of the formula (II-4).

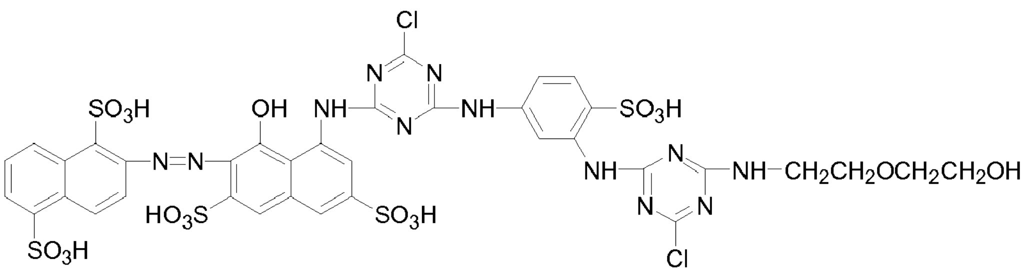

(II-4)

*Preparation example 7 - Preparation of the reactive yellow dye of the formula (III-6)*

5.8 parts by weight of 2-(2-aminoethoxy)ethanol was added into the product (c) of Preparation example 3, and 15 wt% of an alkali aqueous solution was used to adjust the pH of the mixing solution to 6 or more. The mixing solution was kept stirring to obtain the product of the formula (III-6).

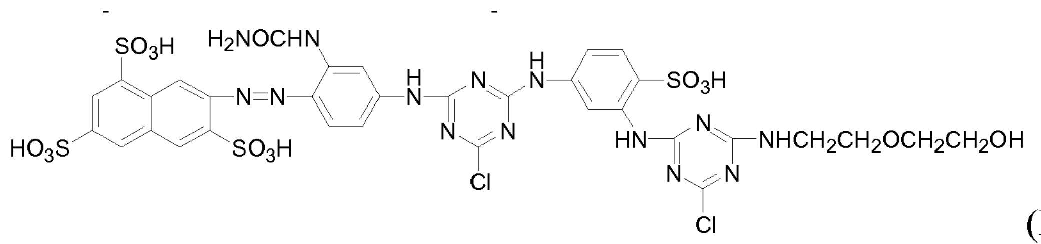

(III-6)

*Preparation example 8 - Preparation of the reactive red dye of the formula (11-5)*

11 parts by weight of ammonia was added into the product (b) of Preparation example 2, followed by heating to 35°C or more. 45 w% of an alkali solution as used to control the pH of the mixing solution. The mixing solution was kept stirring to obtain the product of the formula (II-5).

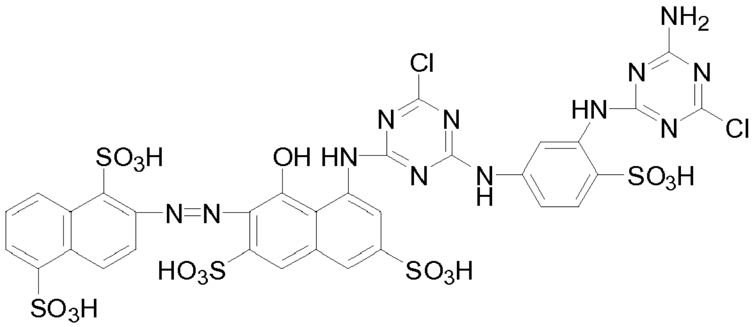

(II-5)

*Preparation example 9 - Preparation of the reactive red dye of the formula (II-6)*

15.2 parts by weight of 2-naphthylamine-1,5-disulfonic acid was dispersed in 150 parts by weight of iced water, followed by adding 14 parts by weight of HCl aqueous solution (32 wt%) and stirring. Then, 3.5 parts by weight of $NaNO_2$ aqueous solution was added therein, and the mixing solution was kept stirring at 0°C to 5°C until the diazotization reaction was completed.

15.95 parts by weight of l-naphthol-8-amino-3,6-disulfonic acid was added into 40 parts by weight of water, and 45 wt% of alkali solution was added therein to dissolve the compounds. The obtained solution was maned C solution. In addition, 9.8 parts by weight of cyanuric chloride was dispersed in iced water by stirring. The C solution was added into the disparsion solution dropwise, 15 wt% of an alkali aqueous solution was used to adjust the pH of the mixing solution to 6 or more.The mixing solution was kept stirring until the condensation reaction was completed. The above product obtained after the diazotization reaction was added into the mixing solution obtained after the condensation solution. The mixing solution was kept stirring until the condensation reaction was completed, and an alkali was used to adjust the pH of the mixing solution to 6 or more. The obtained mixing solution was named D solution. Next, 13.8 parts by weight of cyanuric chloride was dispersed in iced water by stirring, followed by adding 7 parts by weight of ammonia (24 wt%). 45 wt% of an alkali solution was used to adjust the pH of the mixing solution to 9 or more. The mixing solution was kept stirring until the condensation reaction was completed to obtain a product (d). Then, 18.8 parts by weight of 2,4-diaminobenzenesulfonic acid powders were added into 150 parts by weight of water, and 15 wt% of an alkali solution was used to adjust the pH of the mixing solution to 6 or more. The obtained solution was named E solution. The product (d) was added into the E solution, followed by heating to 35 °C or more. 15 wt% of an alkali aqueous solution was used to control the pH of the mixing solution to obtain F solution. The F solution was added into the D solution, and 15 wt% of an alkali aqueous solution was used to control the pH of the mixing solution to natural. The mixing solution was heated to 50°C and kept stirring to obtain

the product of the formula (II-6).

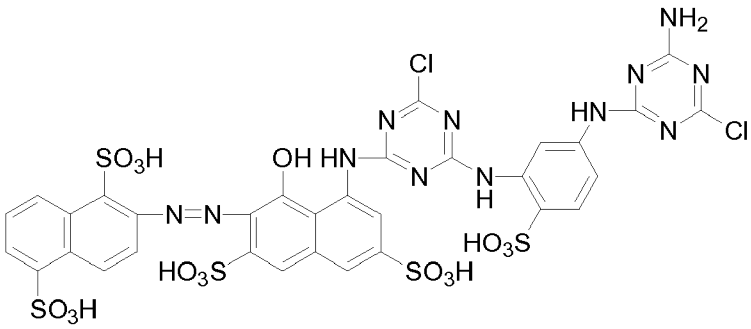

(II-6)

*Example 1*

75 parts by weight of the reactive blue dye of the formula (I-2), 17 parts by weight of a reactive brown dye 11 and 8 parts by weight of a reactive orange dye 12 was mixed well to obtain a dye composition.

*Example 2*

71 parts by weight of the reactive blue dye of the formula (I-2), 15 parts by weight of the reactive red dye of the formula (II-3) and 14 parts by weight of the reactive orange dye 12 was mixed well to obtain a dye composition.

*Example 3*

67 parts by weight of the reactive blue dye of the formula (I-2), 17 parts by weight of the reactive red dye of the formula (II-3), 1 parts by weight of a reactive brown dye 11 and 15 parts by weight of a reactive orange dye 12 was mixed well to obtain a dye composition.

*Example 4*

65 parts by weight of the reactive blue dye of the formula (I-2), 14 parts by weight of the reactive red dye of the formula (II-3) and 21 parts by weight of the reactive yellow dye of the formula (III-5) was mixed well to obtain a dye composition.

*Example 5*

65 parts by weight of the reactive blue dye of the formula (I-3), 15 parts by weight of the reactive red dye of the formula (II-3) and 20 parts by weight of the reactive yellow dye of the formula (III-6) was mixed well to obtain a dye composition.

*Example 6*

62.5 parts by weight of the reactive blue dye of the formula (I-2), 12.5 parts by weight of the reactive red dye of the formula (II-5) and 25 parts by weight of the reactive yellow dye of the formula (III-6) was mixed well to obtain a dye composition.

*Example 7*

63.5 parts by weight of the reactive blue dye of the formula (I-2), 13.5 parts by weight of the reactive red dye of the formula (II-6) and 23 parts by weight of the reactive yellow dye of the formula (III-6) was mixed well to obtain a dye composition.

*Comparative example 1*

Commercial available reactive black dye P-GR was used.

*Comparative example 2*

63 parts by weight of reactive blue dye 171, 11 parts by weight of reactive red dye 141 and 26 parts by weight of reactive yellow dye 84 was mixed well to obtain a dye composition.

Table 1

| | Components in the reactive black dye composition and contents thereof |
|---|---|
| Comparative example 1 | Evercion Black P-GR |
| Comparative example 2 | C.I. Reactive Blue 171 (63%) + C.I. Reactive Red 141 (11%) + C.I. Reactive Yellow 84 (26%) |
| Example 1 | Reactive blue dye of the formula (I-2) (75%) + C.I. Reactive Brown 11 (17%) + C.I. Reactive Orange 12 (8%) |
| Example 2 | Reactive blue dye of the formula (I-2) (71%) + Reactive red dye of the formula (II-3) (15%) + C.I. Reactive Orange 12 (14%) |
| Example 3 | Reactive blue dye of the formula (I-2) (67%) + Reactive red dye of the formula (II-3) (17%) + C.I. Reactive Brown 11 (1%) + C.I. Reactive Orange 12 (15%) |
| Example 4 | Reactive blue dye of the formula (I-2) (65%) + Reactive red dye of the formula (II-3) (14%) + Reactive yellow dye of the formula (III-5) (21%) |
| Example 5 | Reactive blue dye of the formula (I-3) (65%) + Reactive red dye of the formula (II-3) (15%) + Reactive yellow dye of the formula (III-6) (20%) |
| Example 6 | Reactive blue dye of the formula (I-2) (62.5%) + Reactive red dye of the formula (II-5) (12.5%) + Reactive yellow dye of the formula (III-6) (25%) |
| Example 7 | Reactive blue dye of the formula (I-2) (63.5%) + Reactive red dye of the formula (II-6) (13.5%) + Reactive yellow dye of the formula (III-6) (23%) |

*Test example 1 - Textile printing*

The dye paste was prepared according to the textile printing. In brief, 3 parts by weight of the reactive black dye composition shown in Table 1 was added into 50 parts by weight of a thickener, which comprises 2.8 parts by weight of sodium alginate, 38 parts by weight of water, 7 parts by weight of urea and 1.5 parts by weight of $NaHCO_3$. The obtained dye paste was used to dye cotton fabrics. After a drying process, the dyed cotton fabrics was steamed with saturated steam at 102 °C for 10 min. After washing, soaping, rinsing and drying, the dying strength was examined by DATACOLOR 400.

The results of the present testing example are listed in the following Table 2.

Table 2

| | 10g/Kg | 30g/Kg | 60g/Kg |
|---|---|---|---|
| Example 4 | 119.72 | 106.15 | 102.7 |
| Comparative example 2 | 123.14 | 97.25 | 85.62 |

In addition, cotton fabrics were dyed through a pad dying process. After steaming, a fixed amount (500 ml) of water was used to wash the dyed cotton fabrics, and the waste water before and after the washing process was compared. The results are listed in the following Table 3.

Fixing rate (%) = (ABS value before washing – ABS value after washing) / ABS value before wasing x 100%

Table 3

| | Comparative example 1 | Example 4 |
|---|---|---|
| 100g/L | | |
| ABS value before washing | 0.4240 | 0.4840 |
| ABS value after washing | 0.1280 | 0.0470 |
| Fixing rate | 70% | 90% |

The results indicate that the color of the waste water obtained by washing the cotton fabrics dyed with the reactive black dye composition of Example 4 is much lighter than the color of the waste water obtained by washing the cotton fabrics dyed with the reactive black dye composition of Comparative example 1. In addition, according to the results shown in Table 3, the fixing rate of the reactive black dye composition of Example 4 is much better than the fixing rate of the reactive black dye composition of Comparative example 1.

*Test example 2 - Digital printing*

Herein, a printer Epson XP-202 was used to perfom the digital printing test. The method used herein is briefly illustrated as follows. A dye solution was prepared according to the following Table 4 and printed onto cotton fabircs. After drying for 10 min and then steaming for 10 min, the cotton fabrics were placed in 500 g of water and heated to boil to perform a washing process for 10 min. Then, the dye concentration in the waste water (b) was measured. The fixing rate was calculated by the following equations.

Dye concentration used in the printing process (a) – dye concentration in the waste water (b) = dye concentration on the cotton fabrics (a-b)

Fixing rate (%) = dye concentration on the cotton fabrics (a-b) / dye concentration used in the printing process (a) x 100%

Table 4

| | Comparative example 1 | Example 2 | Example 3 | Example 4 |
|---|---|---|---|---|
| Black dye composition | 20% | 17% | 17% | 17% |
| EG | 10% | 10% | 10% | 10% |
| S-465 | 1.5% | 1.5% | 1.5% | 1.5% |
| Buffer solution | 1% | 1% | 1% | 1% |
| Anti-biotics | 0.5% | 0.5% | 0.5% | 0.5% |
| Water | 67% | 70% | 70% | 74% |
| ABS value | 360/609nm | 357/612nm | 357/612nm | 360/611nm |

After the digital printing process, a fixed amount (500 ml) of water was used to wash the dyed cotton fabrics, and the waste water before and after the washing process was compared. The results are listed in the following Table 5.

Fixing rate (%) = (ABS value before washing – ABS value after washing) / ABS value before wasing x 100%

Table 5

| | Comparative example 1 | Example 2 | Example 3 | Example 4 |
|---|---|---|---|---|
| ABS value before washing | 1.6/609nm | 1.568/612nm | 1.616/612nm | 1.882/612nm |
| ABS value after washing | 0.606/603nm | 0.196/589nm | 0.216/585nm | 0.267/592nm |
| Fixing rate | 61.11% | 87.5% | 86.63% | 90.19% |

According to the results shown above, when the cotton fabrics were dyed through either the pad printing process or the digital printing process, after the washing process with the fixed amount of water, the dye contained in the waste water when the black dye composition containing two MCT reactive groups is used is much less than the dye contained in the waste water when the dye composition of Comparative example 1 is used. The fixing rate of the traditional P-type Black P-GR (Comparativ example 1) is only about 61%, and the fixing rate of the reactive black dye composition of the present disclousre can be increased to 85% or more. In particular, the fixing rate of the reactive black dye composition of Example 4 can be increased to 90% or more. The reactive black dye composition of the present disclosure has high fixing rate, and the problem of the waste water generated by the dying process can be relieved. Hence, for the environmental protection issue, the usage rate of the dye can be improved when using the reactive black dye composition of the present disclosure, and therefore the chemical oxygen demand (COD) of the waste water can be reduced.

Although the present disclosure has been explained in relation to its embodiment, it is to be understood that many other possible modifications and variations can be made without departing from the spirit and scope of the disclosure as hereinafter claimed.

## Claims

1. A reactive black dye composition, comprising the following components:

(A) a reactive blue dye represented by the following formula (I) or a salt thereof:

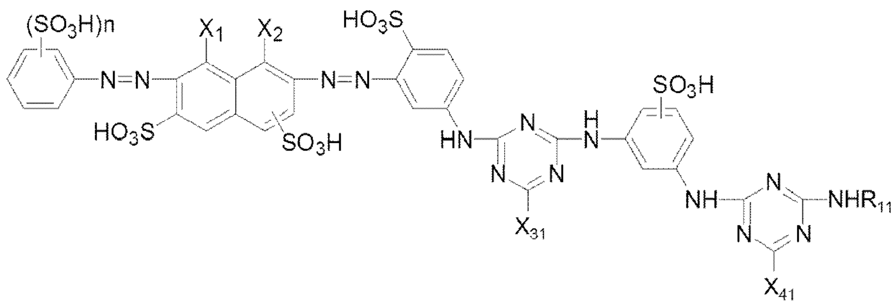

(I)

wherein $X_1$ is -OH or -$NH_2$;
$X_2$ is -OH or -$NH_2$, and $X_1$ and $X_2$ are different;
$R_{11}$ is H, -$C_2H_4SO_3H$, -$C_2H_4OC_2H_4OH$ or

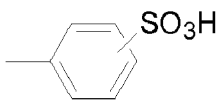

;

$X_{31}$ and $X_{41}$ are respectively a halogen; and
n is 1 or 2; and

(B) a reactive red dye or a salt thereof, a reactive yellow dye or a salt thereof, or a combination thereof.

**2.** The reactive black dye composition of claim 1, wherein $X_{31}$ and $X_{41}$ are respectively Cl, Br or I.

**3.** The reactive black dye composition of claim 1, wherein the reactive blue dye is represented by the following formula (I-1):

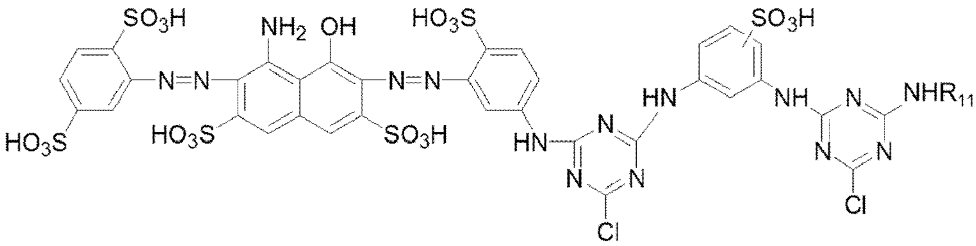

(I-1)

wherein $R_{11}$ is H, $-C_2H_4SO_3H$, $-C_2H_4OC_2H_4OH$ or

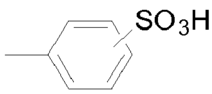

.

**4.** The reactive black dye composition of claim 3, wherein the reactive blue dye is a compound represented by anyone of the following formulas (I-2) to (I-4):

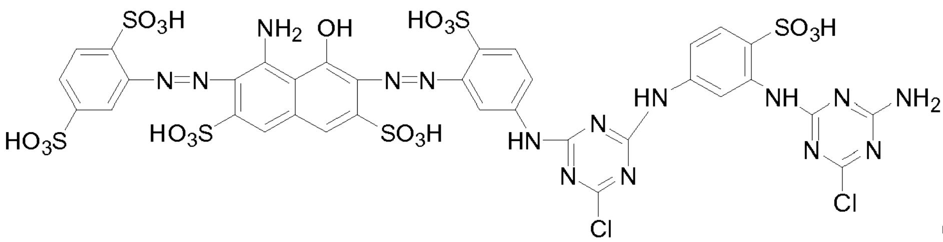

(I-2)

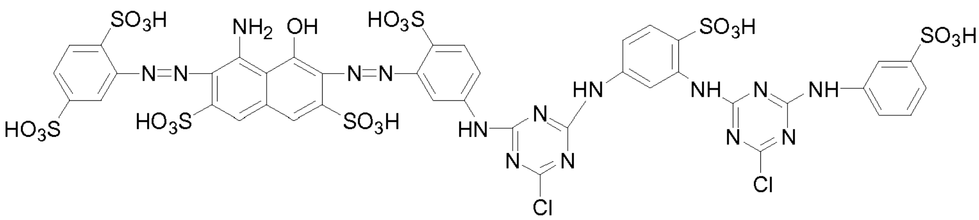

(I-3)

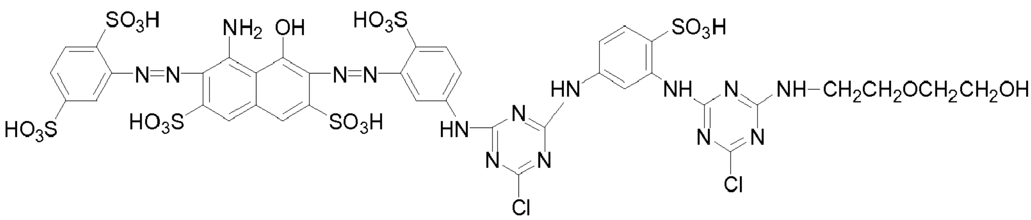

(I-4).

**5.** The reactive black dye composition of claim 1, wherein the reactive red dye is represented by the following formula (II):

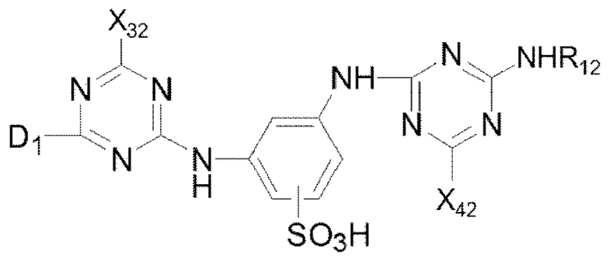

(II)

wherein $R_{12}$ is H, $-C_2H_4SO_3H$, $-C_2H_4OC_2H_4OH$ or

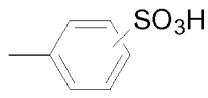

;

$X_{32}$ and $X_{42}$ are respectively a halogen; and
$D_1$ is a red chromophore,
wherein preferably $X_{32}$ and $X_{42}$ are respectively Cl, Br or I.

**6.** The reactive black dye composition of claim 5, wherein the reactive red dye is represented by the following formula (II-1):

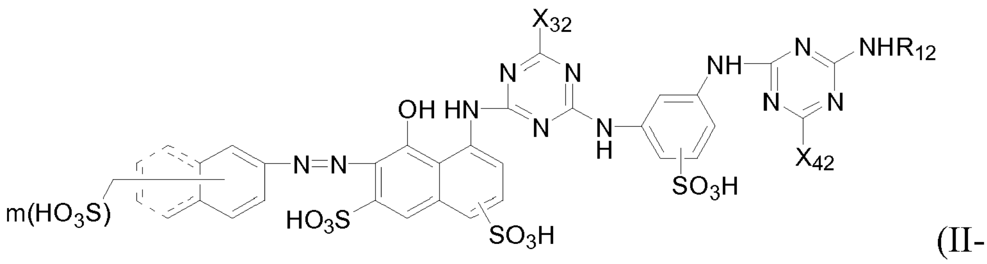

(II-1)

wherein $R_{12}$ is H, $-C_2H_4SO_3H$, $-C_2H_4OC_2H_4OH$ or

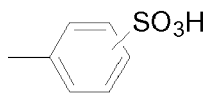

;

$X_{32}$ and $X_{42}$ are respectively a halogen; and
m is 1 or 2,

wherein preferably the reactive red dye is represented by the following formula (II-2):

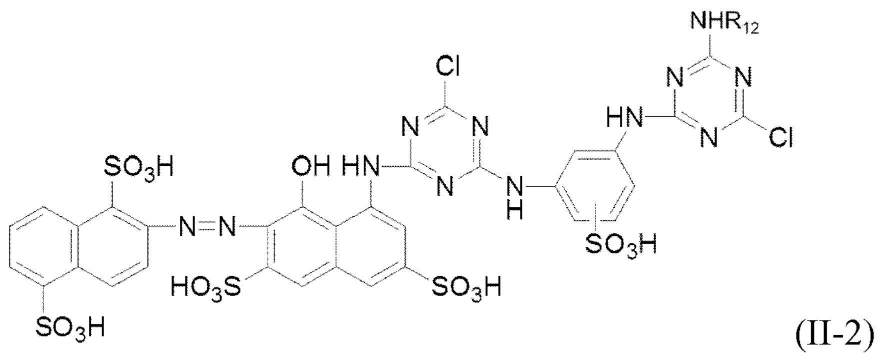

(II-2)

wherein $R_{12}$ is H, $-C_2H_4SO_3H$, $-C_2H_4OC_2H_4OH$ or

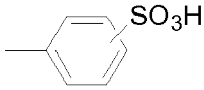

.

wherein preferably the reactive red dye is a compound represented by anyone of the following formulas (II-3) to (II-6):

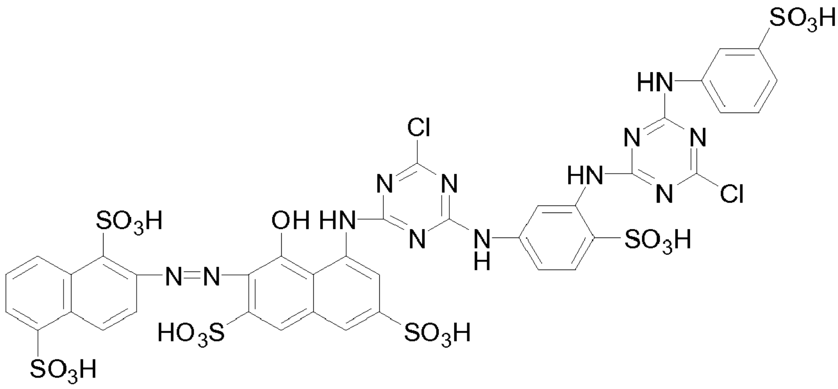

(II-3)

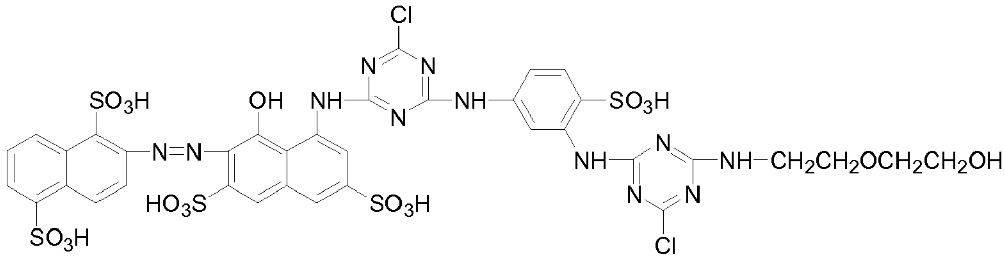

(II-4)

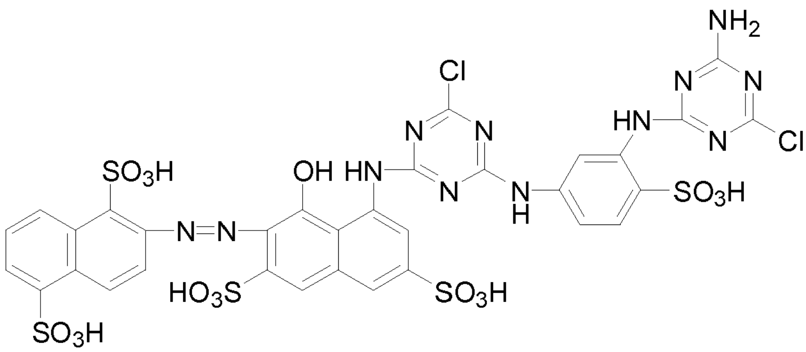

(II-5)

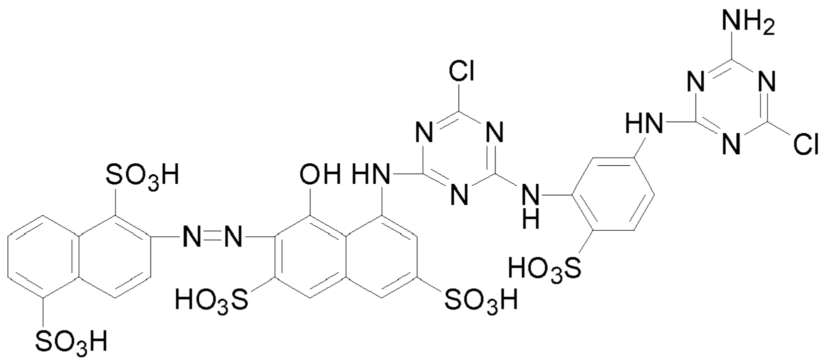

(II-6).

7. The reactive black dye composition of claim 1, wherein the reactive yellow dye is represented by the following formula (III):

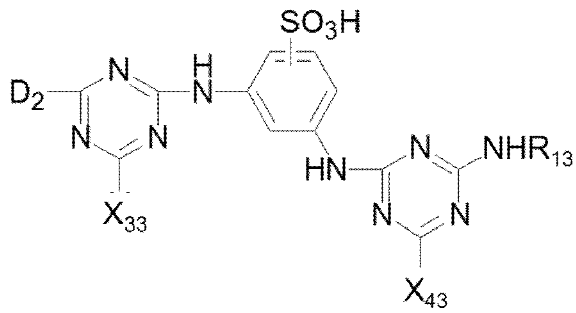

(III)

wherein $R_{13}$ is H, $-C_2H_4SO_3H$, $-C_2H_4OC_2H_4OH$ or

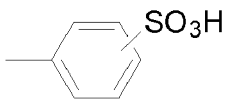

;

$X_{33}$ and $X_{43}$ are respectively a halogen; and
$D_2$ is a yellow chromophore,
wherein preferably $X_{33}$ and $X_{43}$ are respectively Cl, Br or I.

8. The reactive black dye composition of claim 7, wherein the reactive yellow dye is represented by the following formula (III-1):

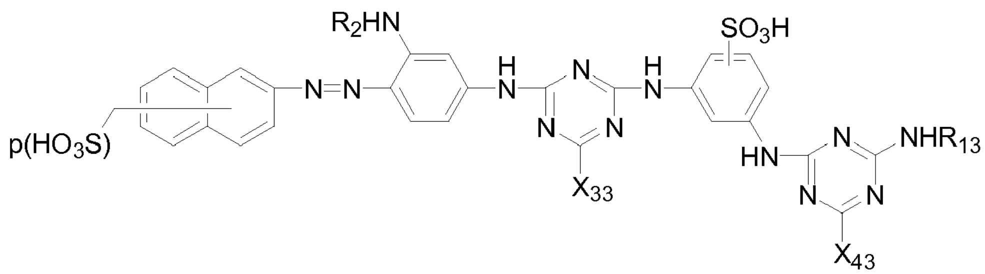

(III-1)

wherein $R_{13}$ is H, $-C_2H_4SO_3H$, $-C_2H_4OC_2H_4OH$ or

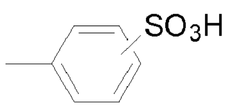

;

$X_{33}$ and $X_{43}$ are respectively a halogen;
$R_2$ is $-CONH_2$ or $-COCH_3$; and
p is 1, 2 or 3.

9. The reactive black dye composition of claim 8, wherein the reactive yellow dye is represented by the following formula (III-2):

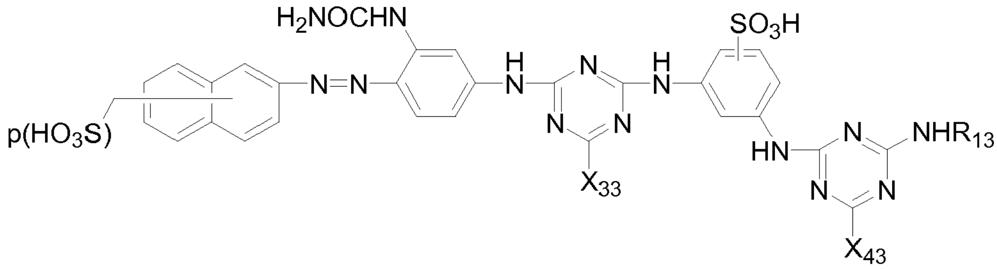

(III-2)

wherein $R_{13}$ is H, $-C_2H_4SO_3H$, $-C_2H_4OC_2H_4OH$ or

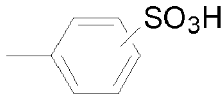

;

$X_{33}$ and $X_{43}$ are respectively a halogen; and
p is 1, 2 or 3.

**10.** The reactive black dye composition of claim 9, wherein the reactive yellow dye is represented by the following formula (III-3):

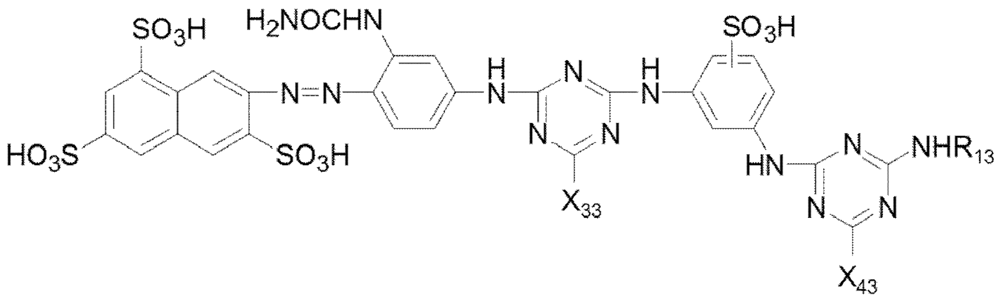

(III-3)

wherein $R_{13}$ is H, $-C_2H_4SO_3H$, $-C_2H_4OC_2H_4OH$ or

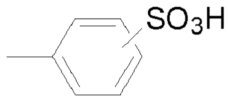

;

and
$X_{33}$ and $X_{43}$ are respectively a halogen.

**11.** The reactive black dye composition of claim 10, wherein the reactive yellow dye is represented by the following formula (III-4):

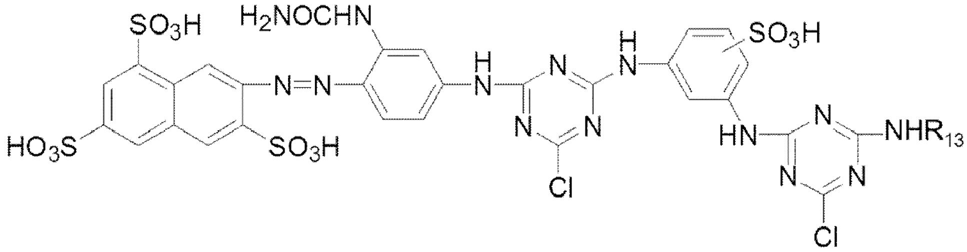

(III-4)

wherein $R_{13}$ is H, $-C_2H_4SO_3H$, $-C_2H_4OC_2H_4OH$ or

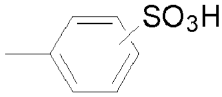

.

12. The reactive black dye composition of claim 11, wherein the reactive yellow dye is represented by the following formulas (III-5) or (III-6):

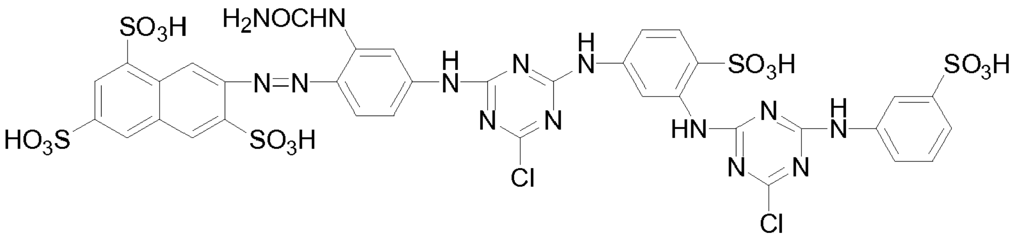

(III-5)

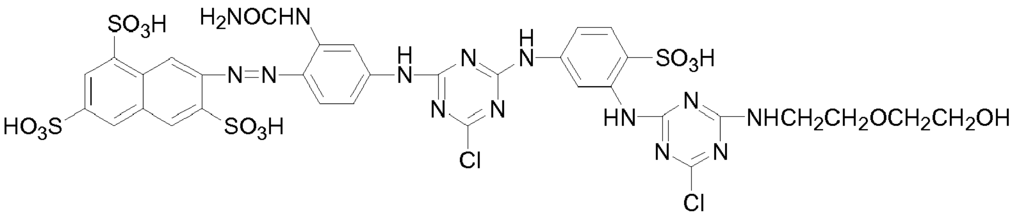

(III-6).

13. The reactive black dye composition of claim 1, wherein the component (B) comprises the reactive red dye or a salt thereof, and the reactive yellow dye or a salt, wherein preferably a content of the reactive blue dye is between 40 parts by weight and 90 parts by weight, a content of the reactive red dye is between 5 parts by weight and 30 parts by weight, and a content of the reactive yellow dye is between 5 parts by weight and 50 parts by weight.

14. A method for dying fibers, comprising:
dying fibers with a reactive black dye composition by digital printing, wherein the reactive black dye composition comprises the following components:

(A) a reactive blue dye represented by the following formula (I) or a salt thereof:

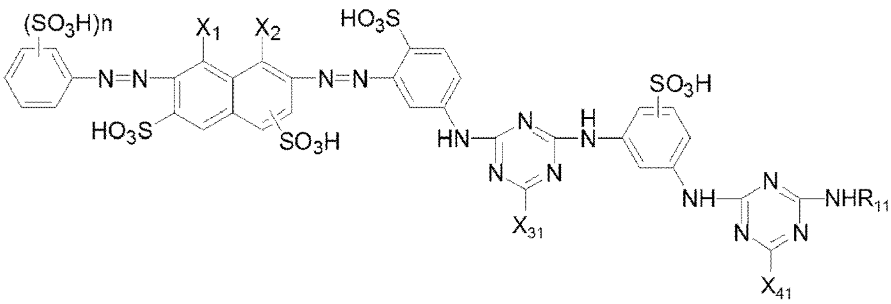

(I)

wherein $X_1$ is -OH or $-NH_2$;
$X_2$ is -OH or $-NH_2$, and $X_1$ and $X_2$ are different;
$R_{11}$ is H, $-C_2H_4SO_3H$, $-C_2H_4OC_2H_4OH$ or

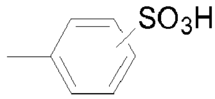

;

$X_{31}$ and $X_{41}$ are respectively a halogen; and
n is 1 or 2; and

(B) a reactive red dye or a salt thereof, a reactive yellow dye or a salt thereof, or a combination thereof.

**15.** A method for dying fibers, comprising:
dying fibers with a reactive black dye composition by textile printing, wherein the reactive black dye composition comprises the following components:

(A) a reactive blue dye represented by the following formula (I) or a salt thereof:

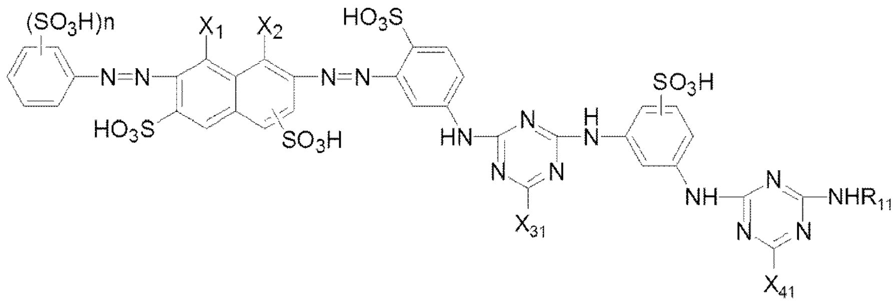

(I)

wherein $X_1$ is -OH or -$NH_2$;
$X_2$ is -OH or -$NH_2$, and $X_1$ and $X_2$ are different;
$R_{11}$ is H, -$C_2H_4SO_3H$, -$C_2H_4OC_2H_4OH$ or

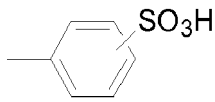

;

$X_{31}$ and $X_{41}$ are respectively a halogen; and
n is 1 or 2; and

(B) a reactive red dye or a salt thereof, a reactive yellow dye or a salt thereof, or a combination thereof.

Europäisches Patentamt
European Patent Office
Office européen des brevets

# EUROPEAN SEARCH REPORT

Application Number
EP 18 18 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 091 056 A1 (EVERLIGHT CHEM IND CORP [TW]) 9 November 2016 (2016-11-09)<br>* claim 2; compounds (I-4), (I-19) *<br>* page 14; compounds (iii-1) *<br>* page 3; table 1; compounds (I-2), (I-3) *<br>* page 3; table 1; compounds (I-5) *<br>* paragraph [0006] - paragraph [0007] *<br>----- | 1-15 | INV.<br>C09B62/09<br>C09B62/085<br>C09B67/24<br>C09D11/328 |
| A | US 5 629 409 A (LOEFFLER HERMANN [DE] ET AL) 13 May 1997 (1997-05-13)<br>* column 27 - column 28; compound 78 *<br>* column 29 - column 30; table 2; compound 85 *<br>----- | 1-15 | |
| A | US 5 611 821 A (HUANG HUEI C [TW] ET AL) 18 March 1997 (1997-03-18)<br>* column 1, line 7 - line 15 *<br>----- | 1-15 | |
| A | CN 104 059 387 A (ZHEJIANG RUIHUA CHEMICAL CO LTD) 24 September 2014 (2014-09-24)<br>* paragraph [0002] *<br>----- | 1-15 | TECHNICAL FIELDS SEARCHED (IPC)<br>C09B<br>C09D |

The present search report has been drawn up for all claims

3

| Place of search | Date of completion of the search | Examiner |
|---|---|---|
| Munich | 11 December 2018 | Mezzato, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 18 5542

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2018

| Patent document cited in search report | Publication date | Patent family member(s) | Publication date |
|---|---|---|---|
| EP 3091056 A1 | 09-11-2016 | BR 102016010470 A2 | 08-11-2016 |
| | | CN 106120388 A | 16-11-2016 |
| | | EP 3091056 A1 | 09-11-2016 |
| | | JP 6201002 B2 | 20-09-2017 |
| | | JP 2017014483 A | 19-01-2017 |
| | | KR 20160131932 A | 16-11-2016 |
| | | TW 201639930 A | 16-11-2016 |
| | | US 2016326384 A1 | 10-11-2016 |
| US 5629409 A | 13-05-1997 | CN 1113508 A | 20-12-1995 |
| | | DE 4408197 A1 | 14-09-1995 |
| | | EP 0671442 A2 | 13-09-1995 |
| | | JP H07258567 A | 09-10-1995 |
| | | US 5629409 A | 13-05-1997 |
| US 5611821 A | 18-03-1997 | DE 19620415 A1 | 20-03-1997 |
| | | FR 2749314 A1 | 05-12-1997 |
| | | GB 2313842 A | 10-12-1997 |
| | | US 5611821 A | 18-03-1997 |
| CN 104059387 A | 24-09-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- TW 106124887
- TW 107110024